# EUROPEAN PATENT APPLICATION

(11) **EP 0 950 915 A2**
(43) Date of publication of application: **20.10.1999**
(21) Application number: 99106174.8
(22) Date of filing: 08.04.1999
(51) Int. Cl.: G02C 5/22

(54) **Temple joint structure for eyeglasses**

(30) Priority: 15.04.1998 JP 12285798
(71) Applicant: YOSHIDA INDUSTRY CO., LTD., Sabae-shi, Fukui-ken 916-0057 (JP)
(72) Inventor: Yoshida, Toshihiro, Sabae-shi, Fukui-ken 916-0057 (JP)
(74) Representative: VOSSIUS & PARTNER

(57) **Abstract**

Disclosed is an improved temple joint structure for permitting an associated temple (2) to be folded on the front of eyeglasses and to be unfolded and yieldingly expanded outward. The temple (2) is pivoted to the outer edge of the front or lens. The temple joint structure comprises a spring-biased tube (4) slidably fitted on a predetermined short length from the proximal or pivoted end of the temple. The spring-biased tube (4) has a coiled-spring (6) surrounding and extending almost the predetermined short length to urge the tube toward the outer edge of the front or lens. The outward expansion of the temple is permitted by depressing the coiled-spring (6) toward the pivoted end of the temple.

## Description

The present invention relates to a temple joint structure which permits an associated temple to be folded on the front of eyeglasses and unfolded and yieldingly expanded outward.

Temples are hinged to the front of eyeglasses so that they may be folded on the front of eyeglasses, and may be unfolded and yieldingly expanded outward. The front of eyeglasses has joint pieces fixed to its opposite outer edges, and each joint is hinged to an associated temple. Specifically, a hinge has its opposite wings soldered to the joint piece and the temple on their inner surfaces, thereby permitting the temple to be folded on the front of eyeglasses and unfolded and yieldingly expanded outward beyond certain limits. The hinged connection, however, does not assure the stable folding-and-unfolding of temples for an elongated period of time; small screws are prone to be loose or be worn. Thus, the eyeglasses are liable to be displaced from the right position on one's face.

Hinges are so small in size that they cannot be produced with ease. Also disadvantageously, the hinged-connection prevents the temple to be open wide beyond the straight alignment with the joint piece. When wearing the eyeglasses on one's face, the opposite temples are yieldingly bent outward, thus causing the temples to resiliently hold the eyeglasses on face.

The temple cannot lose its resilience. Even though the temple is deformed within certain limits, it can recover to the stress-free, original shape when it is released. The hinge, however, is prone to be rickety when subjected to stress, so that the eyeglasses are not permitted to stay on one's face in right position. The eyeglasses have no means for absorbing impulsive force. When impulsive force is applied to the front of the eyeglasses, it is likely to fall from one's face with the result that the lens may be broken or that the frame may be deformed.

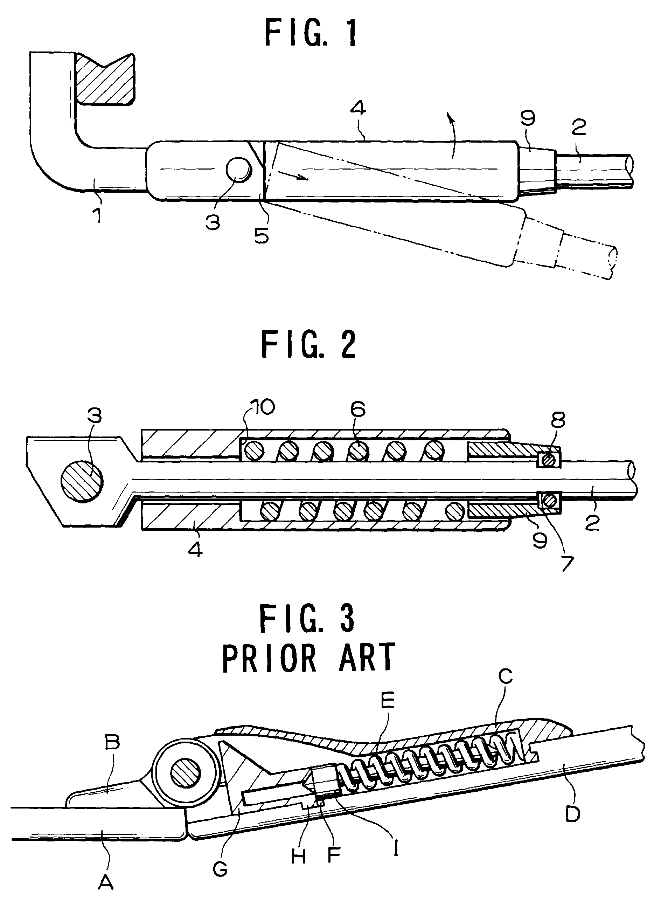

In an attempt to solve such problems it has been proposed that eye glasses use a resilient hinge structure, which permit the temple to open wide beyond the position in which the temple is in the straight alignment with the joint piece on the outer edge of the lens rim. Referring to Fig.3, the resilient hinge structure comprises a first wing **B** to be soldered to the joint piece **A** and a second spring-biased wing **C**, which permits the temple **D** to open wide beyond the straight alignment with the joint piece **A** while applying a counter resilient force to the temple **D**. Specifically the second spring-biased wing **C** comprises, in its hollow body, a headed core rod, a coiled spring **E** loosely wound around the shank of the headed core rod, and a nail piece **G** having an engagement projection **H** on its distal bottom edge. The temple **D** has a longitudinal slot made on its inner surface for catching the spring-biased wing **C** by its distal end, accommodating the coiled spring **E** partly the longitudinal slot. The nail piece **G** is laid on the temple **D** with its engagement projection **H** loosely caught by a groove **F**, which is made on the temple **D** just behind the head **I** of the headed core rod. Thus, the nail piece **G** abuts against the headed core rod, taking a part of retainer for the headed core rod. The temple **D** can be expanded outward beyond the straight alignment with the joint **A**, allowing the nail piece **G** to move and compress the coiled spring **E**. The temple **D** is applied with a restoring force all the time.

The resilient hinge structure, however, is complex in structure, and accordingly the manufacturing cost is high. Also disadvantageously, the resilient hinge structure is prone to be broken, and it cannot be mended. The bottom projection **H** of the nail piece **G** is put in the groove **F**, and the nail piece **G** is confined in the spring-biased wing **C** while being pushed by the headed core rod under the influence of coiled spring **E**, so that the nail piece **G** may be fixedly held in position. Thus, the nail piece **G** cannot be removed from the spring-biased wing **C** with ease, preventing the disassembling and mending of the resilient hinge structure once it has been broken.

In view of the above one object of the present invention is to provide an improved temple joint structure, which is simple in structure, and can be disassembled with ease, thus permitting the mending of the same without difficulty.

To attain this object a temple joint structure for permitting an associated temple to be folded on the front of eyeglasses and to be unfolded and yieldingly expanded outward, the temple being pivoted to the outer edge of the front or lens, is improved according to the present invention in that it comprises a spring-biased tube slidably fitted on a predetermined short length from the proximal or pivoted end of the temple, the spring-biased tube having a coiled-spring surrounding and extending almost the predetermined short length to urge the tube toward the outer edge of the front or lens whereby the outward expansion of the temple is permitted by depressing the coiled-spring toward the pivoted end of the temple.

The coiled-spring may be somewhat compressed and fixed by its distal end to the temple by a ring, which is fixed to the temple to catch the distal end of the tube on the opposite side to the pivoted end of the temple.

With this arrangement the outward opening of the temple will cause the spring-biased tube to be displaced apart from the pivoted end of the temple, so that the coiled-spring is yieldingly compressed to apply a counter force to the temple all the time for returning to the stress-free position in which the temple is in alignment with the joint piece. In place of the spring-biased tube an ordinary slider may be used, provided that it is responsive to the outward expansion of the temple beyond straight alignment with the joint for applying a resilient push to the pivoted end of the temple.

Other objects and advantages of the present invention will be understood from the following description of a temple joint structure according to one preferred embodiment of the present invention, which is shown in accompanying drawings.
Fig.1 shows a temple joint structure according to the present invention;
Fig.2 shows how parts are assembled in the temple joint structure; and
Fig.3 shows a conventional temple joint structure having a resilient hinge incorporated therein.

Referring to Fig.1, a temple joint structure according to the present invention permits an associated temple 2 to be folded on the front of eyeglasses (not shown) and unfolded and yieldingly bent outward (dot-and-dash lines). The temple 2 is pivoted to the outer edge of the front or lens via a joint piece 1, so that it may be folded and unfolded by rotating about the pivot pin 3. A spring-biased tube 4 is slidably fitted on a predetermined length of proximal end of the temple 2. The spring-biased tube 4 has a coiled-spring surrounding and extending almost the predetermined length of proximal end of the temple 2, thus urging the tube 4 toward the outer edge of the front or lens.

With this arrangement the temple 2 can be folded in the direction indicated by arrow, and can be unfolded and expanded in the opposite direction or outward direction. Then, the tube 4 abuts on the corner 5 of the joint piece 1 to be pushed rearward while compressing the coiled-spring 6. The so compressed spring 6 applies a counter force to the temple 2, so that the temple 2 may be put close on one side of one's face wearing the eyeglasses.

Referring to Fig.2, the tube 4 has a coiled-spring 6 contained the rein. The coiled-spring 6 is compressed more or less to push the tube 4 toward the pivot pin 3 of the joint piece 1. The temple 2 has an annular groove 7 made in the vicinity of the distal end of the tube 4. A washer 8 is press-fitted in the annular groove 7, and a ring 9 is sandwiched between the washer 8 and the distal end of the coiled-spring 6 in the tube 4 to be pushed against the washer 8.

Specifically the ring 9 has a stepwise notch made on its distal end, thereby permitting the stepwise notch of the ring 9 to be caught by the washer 8 so that the ring 9 may be prevented from slipping off. Likewise, the tube 4 has an elongated stepwise recess made therein, and a coiled-spring 6 is fitted in the elongated stepwise recess, and is sandwiched between the ring 9 and the proximal end 10 of the stepwise recess, thus pushing the tube 4 toward the joint piece 1.

The tube 4 has a relatively small diameter on its proximal end and a relatively large diameter along its remaining longitudinal length, and the ring 9 is slidably fitted in the distal end of the tube 4. The inner circumferences of the proximal end of the tube, the coiled spring 6 and the ring 9 are flush, and are somewhat larger than the diameter of the temple 2, thereby taking a part of guide in permitting the temple 2 to slide in the tube 4. In assembling these parts the temple 2 is inserted in the tube 4, and then the coiled-spring 6 is inserted in the tube 4 to surround the temple 2 in the tube 4. Thereafter, the ring 9 is pushed in the distal end of the tube 4 while compressing the coiled-spring 6 in the tube 4, and then, the washer 8 is press-fitted in the annular groove 7 to prevent the ring 9 from slipping off from the tube 4. Contrarily in disassembling the temple joint structure into parts the ring 9 is pushed in the tube 4 to compress the coiled spring 6, and the washer 8 is removed from the annular groove 7. A screw or pin can be used in place of the washer.

As may be understood from the above, the spring-biased tube is responsive to the unfolding-and-expanding of the temple beyond the position in which the temple is aligned with the joint for applying a counter force to the temple so that the temple may be made to return to its stress-free alignment position, as is the case with the resilient hinge structure. Thus, the eyeglasses can be worn on one's face stable in right position. The temple joint structure is so simple that it can work well all the time, and it can be disassembled and mended easily even if it does not work well.

## Claims

1. A temple joint structure for permitting an associated temple (2) to be folded on the front of eyeglasses and to be unfolded and yieldingly expanded outward, the temple (2) being pivoted to the outer edge of the front or lens, characterized in that it comprises a slider member (4) spring-biased toward the proximal or pivoted end of the temple (2), whereby the outward expansion of the temple (2) is permitted by making the slider member (4) to move toward the pivoted end of the temple under the resilient influence.

2. A temple joint structure according to claim 1 wherein said slider member comprises a spring-biased tube (4) slidably fitted on a predetermined short length from the proximal or pivoted end of the temple (2), the spring-biased tube (4) having a coiled-spring (6) surrounding and extending almost the predetermined short length to urge the tube (4) toward the outer edge of the front or lens whereby the outward expansion of the temple is permitted by depressing the coiled-spring (6) toward the pivoted end of the temple.

3. A temple joint structure according to claim 2 wherein the coiled-spring (6) is compressed more or less and is fixed to the temple (2) by a ring (9), which is fixed to the temple to catch the distal end of the tube (4).
